# EUROPEAN PATENT APPLICATION

(11) **EP 2 144 044 A1**
(43) Date of publication of application: **13.01.2010**
(21) Application number: 09164752.9
(22) Date of filing: 07.07.2009
(51) Int. Cl.: G01F 23/00, G01F 23/14, G01L 7/00, G01D 1/00

(54) **A system for remote transmission of information indicative of at least one parameter of a fluid contained in at least one reservoir to a remote user location outside the reservoir**

(30) Priority: 08.07.2008 DK 200800960
(71) Applicant: LindCom ApS, 2100 København Ø (DK)
(72) Inventor: Andersen, Flemming Lind, 2100, København Ø (DK)
(74) Representative: Holme Patent A/S

(57) **Abstract**

A system for remote transmission of information indicative of at least one parameter of a fluid (7) contained in at least one reservoir (1,1a,1b,1c) to a remote user location outside the reservoir. A sensor means (10) for sensoring the at least one parameter and providing a sensor signal representing the information, and a communication means for transmission of the sensor signal to the remote user location outside the reservoir (1,1a,1b,1c). The sensor means (10) is submersible in the fluid encapsulated in a housing, the communication means comprises at least a first transmitter and/or receiver part (12) inside the housing, for communicating with a second transmitter and/or receiver part (12) outside the reservoir to a first location outside the reservoir (1,1a,1b,1c). The housing and the at least one encapsulated sensor means (10) and the at least encapsulated first transmitter and/or receiver part (12) together have a density, which is higher than the density of the fluid (7) in the at least one reservoir (1,1a,1b,1c), and the communication means is arranged for wireless transmission of the sensor signal from a location inside the reservoir (1,1a,1b,1c) to at least the first location outside the reservoir (1,1a,1b,1c).

## Description

The present invention relates to a system for remote transmission of information indicative of at least one parameter of a fluid contained in at least one reservoir to a remote user location outside the reservoir, which system includes a sensor means for sensoring the at least one parameter and providing a sensor signal representing the information, and a communication means for transmission of the sensor signal to the remote user location outside the reservoir.

Fuel oil has in a long time been used as heating fuel for heating houses. The oil is stored in a tank or vessel and must be refilled with an interval depending on the consumption. For many tanks, the only way for an oil distributor when he arrives with a road tanker to investigate the oil level is to put down a dipstick and look how far up on the dipstick the oil level reaches. If the consumption has been less than expected the distributor has more or less driven in vain.

This problem is attempted solved by means of the system described in US patent application US2006/0033631. This known system uses a battery driven measuring unit including a pressure sensor for measuring the fluid level in a propane tank. The measuring unit inside the tank is connected through a cable and an electrical feedthrough to a transmitter outside the tank. The transmitter is in wireless communicative connection with a transceiver unit. The transmitter transmits the sensor signals representing the measured data to the transceiver unit that further transmits the data to a user interface like a computer. In this way the distributor can check the oil level in advance and do not need to risk driving in vain.

This known system is unreliable for use with more viscous fluids than propane in that there is a risk that the electrical cable is not enough fed into the tank causing the sensor means to hang a bit above the bottom. The sensor will then not measure the pressure at the bottom of the tank, the calculated volume of oil in the tank will be underestimated and the distributor will come unnecessarily often to fill up the tank. If the sensor is introduced through an already existing opening or pipe in or at the tank, for example a filler pipe, an airing or ventilation pipe, a pipe to the oil burner, an inspecting or cleaning opening or any other suitable sized access opening or pipe, there is a risk that the sensor gets stuck in the opening or pipe, especially if there is a distinct bend on the pipe. If the temperature is low the cable will be stiffer, further complicating the introduction. No one will appreciate to spend hours in freezing temperature trying to introduce a sensor and a cable into a too narrow or too twisty pipe. Also in this case there is a risk that the sensor is incorrectly believed to lie on the bottom of the tank. The use of a larger opening will allow a person who installs the sensor to see whether the sensor is lying on the bottom of the tank or not, however the disadvantage is that there will be difficulties in closing the cover of the large opening fully. In addition, there are a lot of old tanks around that are buried in the ground and do not have any larger opening. The only pipes available are the filler pipe and the ventilation pipe, which are narrow and often with many pipe bends that makes introduction of a sensor difficult. To drill a hole in the wall of the tank and introduce the sensor through the hole constitute yet an alternative solution for feeding and suspending a cable connected sensor inside the tank, however, to drill a hole in a metal plate in the proximity of oil vapor can be dangerous, and there is a risk that the hole is drilled below fluid level.

Within the scope of the present invention the term "reservoir" means a tank, a vessel, a cistern, a well, a pond, a lake, or any other fluid-containing reservoir.

In a first aspect according to the present invention is provided a system of the kind mentioned in the opening paragraph that is easy to install in a reservoir such as a fuel tank.

In a second aspect according to the present invention is provided a system of the kind mentioned in the opening paragraph that always finds the lowest possible position in a reservoir such as a fuel tank.

In a third aspect according to the present invention is provided a sensor means for a system of the kind mentioned in the opening paragraph, which sensor means has a longer lifetime than known devices.

In a fourth aspect according to the present invention is provided a sensor means for a system of the kind mentioned in the opening paragraph having a high resistance to fluid penetration.

In a fifth aspect according to the present invention is provided a system of the kind mentioned in the opening paragraph which provide for transmission of a sensor signal containing information about the fluid level in a reservoir to a user interface, at any desirable location, optionally anywhere on the earth.

In a sixth aspect according to the present invention is provided a system of the kind mentioned in the opening paragraph for monitoring the fluid level inside a reservoir irrespective of where the reservoir is situated.

The novel and unique features whereby this is achieved according to the present invention consists in that, the system comprises that
- the sensor means is submersible in the fluid encapsulated in a housing,
- the communication means comprises at least a first transmitter and/or receiver part inside the housing, for communicating with a second transmitter and/or receiver part outside the reservoir to a first location outside the reservoir,
- the housing and the at least one encapsulated sensor means and the at least encapsulated first transmitter and/or receiver part together have a density, which is higher than the density of the fluid in the at least one reservoir, and
- the communication means is arranged for wireless transmission of the sensor signal from a location inside the reservoir to at least the first location outside the reservoir.

The fluid proof housing advantageously encapsulates the sensor means and the first transmitter and/or receiver part and protects the electronics of the sensor means and of the first transmitter and/or receiver part from contact with fluid in the reservoir, which fluid could be detrimental to the electronics.

The housing can also be a shell with a hole or a net in which the sensor means and the first transmitter and/or receiver part are freely positioned. In that case the sensor means and the first transmitter and/or receiver part must each be fluid proof encapsulated to protect the electronics and they must be in electronic communication, e.g. by means of a fixed cable. The housing together with the encapsulated sensor means and first transmitter and/or receiver part is in the following called "measurement unit".

Irrespective of design of the fluid proof housing, the density of the housing, with the encapsulated sensor and the first transmitter and/or receiver part inside, is higher than the density of the fluid. This makes installation very easy, since it is only necessary to throw the measurement unit into the reservoir. The measurement unit will due to its higher density sink to the bottom of the reservoir and the sensor in the measurement unit will always measure the fluid column of the fuel, e.g. the oil, above the bottom. That the pressure is measured at the bottom of the reservoir is important, since it is only the pressure at the bottom of the reservoir that can be used to calculate the real amount of fluid in the reservoir. Since the first transmitter and/or receiver part in the measurement unit transmits or broadcasts the sensor signal wirelessly there is no need to fasten the measurement unit inside the reservoir or arrange the measurement unit in a certain way inside the reservoir. The gravitation will cause the measurement unit to lie on the bottom of the reservoir. However, where the measurement unit lies on the bottom of the reservoir is irrelevant unless the bottom is not horizontal. However, the gravitation will cause the measurement unit to roll down to the lowest position of the reservoir. A measurement unit with a cable sticking out of the measurement unit will not as easily roll down to the lowest position of the reservoir.

The housing can advantageously be made of a radiofrequency transparent material so that an antenna can be placed inside the housing and still be able to send sensor signals to the outside of the housing.

A reservoir such as a fuel tank is made of metal and is normally buried in the earth. For use with such a reservoir a preferred embodiment of the system according to the present invention may include an antenna, optionally in a very simple embodiment in the form of a thin electrical insulated wire extending from the second transmitter and/or receiver part into the reservoir through an opening in the reservoir wall or through a pipe on the reservoir wall. A cable between a sensor inside the reservoir and a transmitter outside the reservoir is a thick structure including many electrical wires with their respective isolation as well as a screen around the wires and an outer thick isolation in order to avoid short-circuit when in contact with fluid. In contrast, an antenna only needs one electrical wire that is advantageously thin and also the isolation is thin. With a thin wire it will be possible to tighten the opening or pipe of the reservoir with a cover in a fluid tight manner. Since the antenna out of the second transmitter and/or receiver part extends into the reservoir the wireless communication between the second transmitter and/or receiver part and the measurement unit occurs inside the reservoir and the measurement unit does not need an outside antenna. The measurement unit will have an antenna inside the housing. The first transmitter and/or receiver part in the measurement unit will from the bottom of the reservoir transmit through the fluid the sensor signal, which will reach the second transmitter and/or receiver part through the antenna of the second transmitter and/or receiver part. From the second transmitter and/or receiver part the sensor signal can be transmitted further.

Less preferred, although possible embodiment of the system according to the present invention may include an outside antenna preferably in the form of a thin electrical insulated wire extending from the measurement unit and out through an opening in the reservoir wall. The first transmitter and/or receiver part inside the reservoir will transmit the sensor signal through the antenna out of the reservoir.

As mentioned above the antenna is different from a cable in that an antenna is thin and flexible, which will enable a tight closing of the opening or pipe, through which the antenna is led. The housing maybe configured as a small ball e.g. at a size as a golf ball. Such a small ball will on its own motion inherently roll down also through narrow pipes and find the lowest possible position of the reservoir. An outside thin and flexible antenna extending through the housing will not limit the mobility. Small wheels may be provided all around the outside of the housing to enhance mobility of the housing, at least at locations without contact with fluid.

The reservoir can also be of the kind made of plastic or any other electromagnetic transparent material or the reservoir can be open, without any upper layer or top cover. In any of these three cases the first transmitter and/or receiver part can transmit wirelessly the sensor signal representing the pressure of the fluid in the reservoir from inside the reservoir to the second transmitter and/or receiver part outside the reservoir.

The transmittance of the sensor signal between the first transmitter and/or receiver part and the second transmitter and/or receiver part can be performed using any radio wave as carrier. The technique used can for example be radio frequency identification (RFID), Bluetooth or any other RF transmitting and receiving systems. Using RFID, active RFID is preferably used. If the sensor signal is transmitted without an outside antenna out of the measurement unit the carrying frequency of the sensor signal should be chosen so that the sensor signal is not absorbed by the fluid in the reservoir.

In an advantageously embodiment of the system according to the present invention the system has a communication means connecting the second transmitter and/or receiver part outside the reservoir to a remote user location.

This communication means can be wireless communication like mobile telephone communication, satellite communication or radio broadcasting. The communication can also be wired using the fixed telephone network or the Internet. The communicative connection can also be a combination of any of these. The advantage is that the wide variety of communication means enables the sensor signal to be transmitted to nearly everywhere on the earth.

In a preferred embodiment of the system according to the invention the communication means further can include a master control unit for receiving the sensor signal and storing the parameter represented by the sensor signal, which stored parameter is accessible from the remote user location, preferably by means of a user interface.

The master control unit is a monitoring unit of the measurement unit with the sensor means and the first transmitter and/or receiver part of the measurement unit. The master control unit also has a memory to store at least the last measurement of the measurement unit. Preferably the master control unit is wirelessly connected to the first transmitter and/or receiver parts. The master control unit is programmed to send signals to the measurement unit through the first transmitter and/or receiver part to awake the sensor so that the sensor can perform a measurement.

The master control unit can include a pressure measurement unit to measure the atmospheric pressure. Variations in the pressure in the reservoir measured by the measurement unit due to variations in atmospheric pressure can in this way be compensated.

In an embodiment of the system according to the invention the communication means can include alert means for providing an alert at the remote user location that a parameter has been stored.

The alert can be an e-mail sent to a customer, an SMS sent to the customer's mobile telephone, a siren or the lighting of warning lamps. If the content in the reservoir is oil, petrol, water or any other fluid or gas to be consumed and the parameter tells that the amount in the reservoir is low then an alert is sent to the one responsible to fill the reservoir that it is time to fill the reservoir. If the reservoir on the other hand is used to store manure slurry or waste from an industry and the parameter tells that the amount in the reservoir is high then the alert is sent to the one responsible to empty the reservoir that it is time to empty the reservoir.

In another embodiment of the system according to the invention any of the sensor means, the communication means and/or, the alert means and the user interface can be battery driven.

The sensor means and the first transmitter and/or receiver part in the housing in the reservoir may be battery driven, preferably with a battery life of at least 10 years. When the battery is emptied and there is no power for the measurement unit to do a measurement or transmit a sensor signal, a new measurement unit may be thrown into the reservoir to substitute the first measurement unit. The second transmitter and/or receiver part is preferably battery driven. However, solar cells or fuel cells delivering the necessary electrical power are also options. The master control unit is preferably supplied by the electric supply. However, if the master control unit is situated far away from the electric supply the master control unit can be battery driven or driven by solar cells or fuel cells. If the user interface is a laptop or a mobile telephone it is also battery driven.

In yet another embodiment of the system according to the present invention the user interface can be a computer, a mobile phone, an indicator, or a warning system including a sensible, visual or audible alert.

In another embodiment of the system according to the present invention the at least one parameter can be a physical parameter selected from the group comprising the level of the fluid, the pressure of the fluid in the reservoir, the volume of the fluid, the temperature of the fluid and weight of the fluid. The person skilled in the art will understand that the list of parameters is not exhaustive.

To measure the volume or the weight of the content of the reservoir one solution is to measure the pressure of the fluid from a position at the bottom of the reservoir. The weight or volume is calculated knowing the shape of the reservoir and the density of the fluid. Since the volume of the content change with temperature the temperature is preferably also measured. If the reservoir is closed and can keep an overpressure it is important to measure the temperature. Otherwise it is not possible to know whether a reduced pressure at the bottom of the reservoir is due to a consumption of the fluid or due to a lower temperature. If the reservoir is open and is not able to keep another pressure than that of the surroundings, the pressure outside the reservoir is measured to compensate for the fluctuations in the atmospheric pressure.

In another embodiment of the system according to the invention the sensor means can be selected from the group comprising a strain gauge or a capacitance pressure gauge.

A strain gauge utilizes that bending a piece of metal will change its electrical resistance or resistivity. The housing of the measurement unit may include a liquid enclosed by a membrane in order to transfer to a very high degree the pressure from the fuel oil outside the measurement unit to a pressure sensor like a strain gauge positioned just behind the membrane-enclosed liquid on the interior face of the housing.

The strain gauge can be fastened by e.g. glue on the interior face of the housing in such a way that no fluid can leak into the measurement unit between the wall of the measurement unit and the strain gauge. The pressure from the fluid in the reservoir exerted through the membrane-enclosed liquid will cause the strain gauge to bend. The measured electrical sensor signal is a measure of the pressure in the reservoir. The relation between how much the metal is bent and the change in resistivity of the metal is temperature dependent. To compensate for the variation in resistivity e.g. a thermocouple or a thermistor may be situated inside the measurement unit or outside the measurement unit close to the measurement unit.

In another embodiment of the system according to the invention the system can comprise a plurality of distinct reservoirs provided with respective sensor means and respective communication means in communication with a respective remote user location via a common master control unit.

There may be two or more reservoirs closer to each other than the wireless communication range between the second transmitter and/or receiver and the master control unit. Each reservoir has its own measurement unit and second transmitter and/or receiver part. To facilitate the monitoring of the fluid levels in the different reservoirs only one master control unit is used. In the master control unit each first transmitter and/or receiver part has its own reference number. The master control unit also has memory to store at least the last measurement of each measurement unit.

In another embodiment of the system according to the invention the system can operate via Internet, radio communication, microwave communication, infrared communication, telecommunication and/or satellite communication.

The communicative connection between the master control unit and the user interface can be a wired communicative connection using the fixed telephone network or Internet. However, if the reservoirs and the master control unit are situated in a remote place wireless communication is preferred. The information can be sent by radio communication, mobile telecommunication or satellite communication. Of course, a combination of the different wireless communications and wired communications can be used.

The invention also relates to a method for remote transmission of information indicative of at least one parameter of a fluid contained in at least one reservoir to a remote user location outside the reservoir.

The method comprises the steps of submersing a sensor means encapsulated in a housing in the fluid in the reservoir, which housing and at least one sensor means together have a density, which is higher than the density of the fluid in the at least one reservoir, sensoring the at least one parameter, providing a sensor signal by means of the sensor means, which sensor signal represents the information, and wirelessly transmitting the sensor signal to at least outside the reservoir by means of a first transmitter and/or receiver part inside the housing.

By means of these steps it is possible to install a measurement unit to measure the amount of fluid in a reservoir very easily and fast. The housing including the sensor means sinks to the bottom of the reservoir. A first transmitter and/or receiver part inside the housing may or may not constitute a part of the weight for facilitating fast and prompt submersion and sinking of the measurement unit towards the bottom of the reservoir. Immediately after the sensor means has reached the bottom of the reservoir the sensor means can start to provide a sensor signal representing at least one characteristic of the fluid to the outside of the reservoir.

In an advantageously aspect of the method according to the present invention the sensor signal is transmitted from a second transmitter and/or receiver part of the communication means outside the reservoir to the remote user location via a master control unit, which master control unit receives the sensor signal and stores the sensor signal as data or information representing the sensored parameter, which master control unit is accessible from the remote user location, preferably wirelessly accessible.

It is possible to further send the information using the second transmitter and/or receiver part to any place on the earth via the master control unit. The information can be sent to e.g. a computer or mobile telephone to tell the user of the method about the fluid level in the reservoir. If the fluid in the reservoir is oil in a tank the information can be sent in the form of an alert to e.g. a mobile telephone to tell the oil distributor that it is time to fill the tank. This enables in this case the oil distributor to plan the optimal distribution route. The presented example is not limited to oil. If e.g. milk from cows or slurry from animals are stored in a reservoir the information or alert is sent to the one responsible for emptying the reservoir.

In a preferred aspect of the method according to the present invention the second transmitter and/or receiver part of the communication means is part of the master control unit.

The invention also relates to the use of the system described above for monitoring the fluid level in a reservoir.

The invention also relates to the use of the system described above on a conventional buried or freestanding fuel oil tank without branch pipes for insertion of sensor means.

The invention will be explained in greater detail below, describing preferred embodiments with reference to the drawings, in which
fig. 1 shows a tank filled with liquid, where the measurement unit is located on the bottom of the tank and an antenna extends from the measurement unit through an opening in the tank wall outside the tank,
fig. 1a shows a sectional view taken along line Ia-Ia in fig. 1 of the measurement unit with a pressure sensor, a battery, transmitter and/or receiver part, and an antenna,
fig. 2 shows one example of how the sensor signal is transported from the measurement unit to the user interface,
fig. 3 shows the tank when the measurement unit transmits and receives signals inside the tank to and from an antenna extending from a second transmitter and/or receiver part entering the tank through a hole, and
fig. 3a shows a sectional view taken along line IIIa-IIIa in fig. 3 of the measurement unit with a pressure sensor, a battery, transmitter and/or receiver part, and an antenna.

In the following the inventive system will be described with the assumption that the reservoir is an oil tank and the fluid is fuel oil. However, the person skilled in the art will understand that other reservoirs and fluids are foreseen within the scope of the present invention. Also, a tank may or may not be buried.

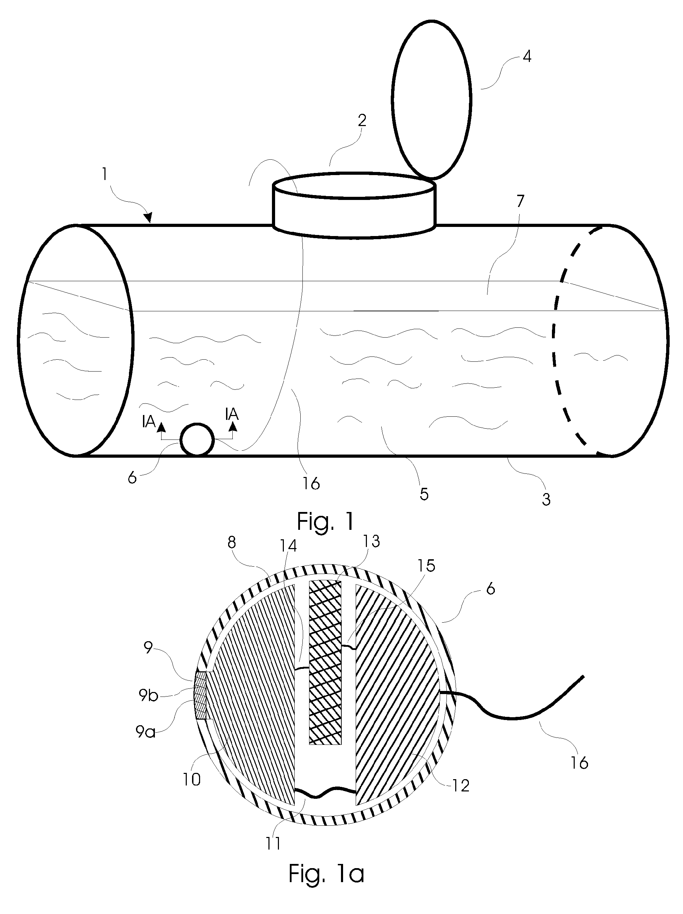

Fig. 1 and fig 1a will in the following be described in common. Fig. 1 shows schematically a cylindrical reservoir in the form of a tank 1 with an opening 2, a bottom 3 and a cover 4 for covering the opening 2. The cover 4 is closed when the tank 1 is in use. The tank 1 may or may not be buried in the ground or standing on the ground or on a floor. The tank 1 can have a filler pipe, a ventilation pipe for pressure equalizing during fill up and an outlet pipe, not shown. The tank 1 is shown with a wall 5 that is transparent only for illustrative purposes and for visualizing a measurement unit 6 at the bottom 3 of the tank 1. The tank 1 is little more than half-filled of fluid 7. The fluid can be oil 7, petrol, manure slurry, water, milk, beer, propane, nitrogen or any liquid or gas. The shape and size of the measurement unit 6 are preferably like a golf ball, which is smaller than the diameter of most ventilation pipes of oil tanks and the ball shape will enable the measurement unit 6 to easily roll down and lie on the bottom 3 of the tank 1.

Fig. 1a shows in more detail a sectional view of the measurement unit 6 to illustrate the interior components of said measurement unit. The measurement unit 6 has a housing 8 defined by a surrounding wall with a section 9 comprising a membrane 9a surrounding a liquid 9b. The liquid 9b ensures that the pressure from the fuel oil 7 outside the measurement unit 6 is transferred to a pressure sensor 10 to a very high degree. The pressure sensor 10 measures the pressure of the fuel oil 7 inside the tank 1 and sends a signal through an electrical wire 11 to a first transmitter and/or receiver part 12. The measurement unit 6 is powered by a battery 13, thus the battery powers the pressure sensor 10 and the first transmitter and/or receiver part 12 with electrical energy through electrical wires 14 and 15, respectively. As shown in fig. 1, the first transmitter and/or receiver part 12 has a first antenna 16 for sending the sensor signal and, which first antenna 16 extends out of the tank 1 through the opening 2, taking precautions to keep a free end 16a of the first antenna 16 outside of the tank 1 when the measurement unit 6 is thrown into the tank 1. The first antenna 16 is thin allowing the cover 4 to be properly shut. If the content in the tank 1 is a gas there is a risk that the cover 4 will not be tight enough due to the first antenna 16. In that case it will be better to use an electrical feedthrough on a flange and attach it to a branch pipe on the tank.

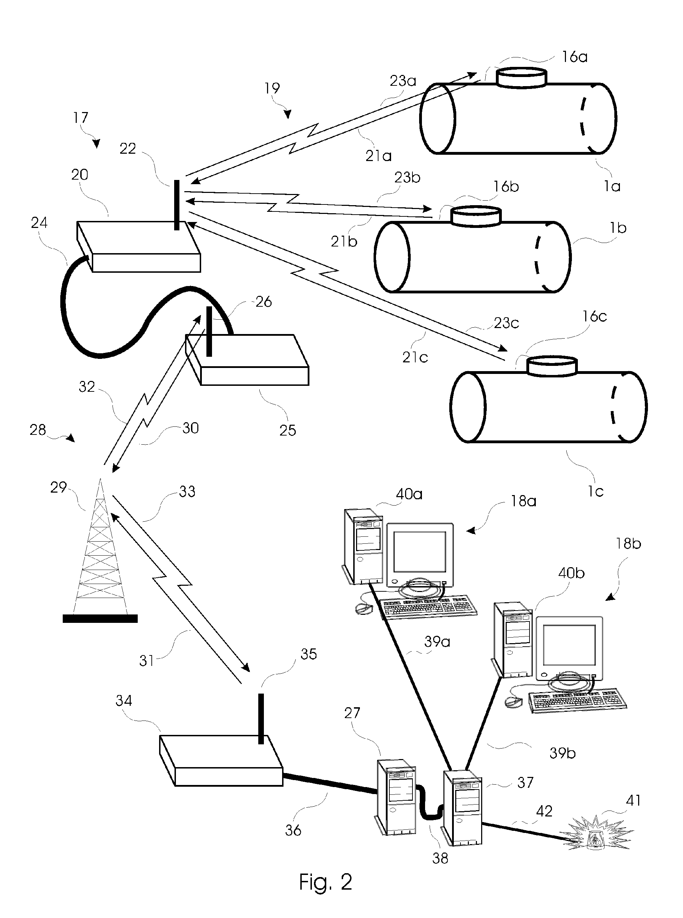

Fig. 2 illustrates schematically an example of a system 17, according to the present invention. Information about the fuel oil levels in three tanks 1a,1b,1c is transmitted to user interfaces 18a,18b. In the example of the system 17 three tanks 1a,1b,1c are shown, which should not be considered as a limitation of the number of tanks. The number of the user interfaces 18a,18b in the shown example of the system 17 should not be a restriction either. The system 17 is only one way of transmitting the measured sensor signal from the tanks 1a,1b,1c to the user interfaces 18a,18b, but any transmittance of the sensor signal would it be through any wireless or any wired communicative connection or combination of the two known in the art should be considered as possible.

Each tank 1a,1b,1c has a measurement unit 6. From each measurement unit extends a first, a second and a third antenna 16a,16b,16c. A local radionet 19 connects the measurement units 6 and a master control unit 20 in both directions. Through the first, second and third antennas 16a,16b,16c the measurement units 6 each broadcast an output sensor signal 21a,21b,21c, indicative of the fuel oil level in respective tank 1a,1b,1c, to the master control unit 20 through a fourth antenna 22 of the master control unit 20. The distance between the tanks 1a,1b,1c and the master control unit 20 must not be longer than the broadcasting range of the local radionet 19 between the first, second and third antennas 16a,16b,16c and the master control unit 20 in both directions. The local radionet 19 can be any technique using radio waves as carrier like RFID, Bluetooth or any other RF transmitting and receiving systems. As mentioned above the master control unit 20 saves at least the last measurement made by each measurement unit. If there is a disconnection between the master control unit 20 and any of the measurement units 6 or between the master control unit 20 and a web server 37, the sensor signal 21a,21b,21c can be sent at a later time.

The master control unit 20 has a list or table of all addresses of the measurement units 6 for storing which measurement unit 6 that measured which sensor signal 21a,21b,21c. By mean of the master control unit 20 it is possible to configure and control the local radionet 19 and the measurement units. If for example the measurement units 6 lie dormant to save the batteries of the measurement units 6 the master control unit 20 can awake the measurement units to do measurements and transmit the sensor signals 21a,21b,21c to the master control unit 20 by broadcasting signals 23a,23b,23c.

The master control unit 20 is in wired communication through RS-232 24 to a GPRS unit 25. The GPRS unit 25 transmits the sensor signal 30 using a fifth antenna 26 to a gateway 27 over a wireless first Internet connection 28. The wireless first Internet connection 28 is a mobile telephone network, symbolized by a cell tower 29 and the signals to 30,31 and from 32,33 the cell tower 29. The broadcasted output sensor signal 30,33 from the GPRS unit 25 via the cell tower 29 reaches a third transmitter and/or receiver part 34 through a sixth antenna 35. The third transmitter and/or receiver part 34 is connected to the gateway 27 through first communicative connection 36.

The GPRS unit 25 has an Internet address. To maintain its address, the GPRS unit 25 sends a minimal signal at a fixed time interval. This interval is determined by the telephone company and can be adjusted if the telephone company changes the requirements or if the telephone company is exchanged. In the other end of the first Internet connection 28 there is the gateway 27, also with an Internet address. The gateway 27 forwards the sensor signal to a web server 37 through a wired second communicative connection 38. Using third and fourth communicative connections 39a,39b in the form of a second Internet connection user interfaces 40a,40b here in the form of computers, can connect to the web server 37 and get all possible information about the content of the tanks 1a,1b,1c. The user interfaces 40a,40b can also be mobile telephones, in which case the third and fourth communicative connections 39a,39b between the web server 37 and the user interfaces 40a,40b is a mobile telephone network. A flashing lamp 41 gives a visual alert means, which is activated through a fifth communicative connection 42 when e.g. the fuel oil level in the tank 1 measured by the measurement unit 6 is below a certain predetermined level and the tank 1 needs to be filled up. There are also examples when the tank 1 must be emptied e.g. if the tank 1 is used to store slurry. When the level of slurry in the tank 1 passes above a certain predetermined level an alert signal is sent to activate the alert means.

The web server 37 can store all sensor signals. The web server 37 can also store the dimensions of all used tanks 1a,1b,1c so that the web server 37 can calculate the amount of fuel oil left in each tank 1a,1b,1c out of the measured pressure in the tanks 1a,1b,1c. The web server 37 can also calculate when each tank 1a,1b,1c is supposed to be empty or filled, depending on whether the tanks 1a,1b,1c are drained or filled up. If a predefined fluid level threshold is passed of a certain tank 1a,1b,1c, the web server 37 will send a message e.g. in the form of an auto generated e-mail or SMS to the relevant user. The relevant user can be the owner, the one responsible to supply the tank with e.g. oil or gas or the one responsible to empty the tank from e.g. manure slurry.

It is possible from the user interfaces 40a,40b to actuate and send a request signal to do an extra measurement. The request signal is sent in the same way as the sensor signals 21a,21b,21c,30,33 presented above was sent but backwards. Through the third and fourth communicative connections 39a,39b in the form of a second Internet connection the user at any user interface 40a,40b requests at the web server 37 for a measurement to be performed on any tank 1a,1b,1c. The request signal is sent through the second communicative connection 38 to the gateway 27. Further over the wireless Internet connection 28, where the broadcasted request signal 31,32 reaches the GPRS unit 25 and the master control unit 20. The master control unit 20 broadcasts a wakening signal on the local radionet 19 to the measurement unit of the relevant tank. The measurement unit measures the pressure in the tank and new sensor signal is sent as described above.

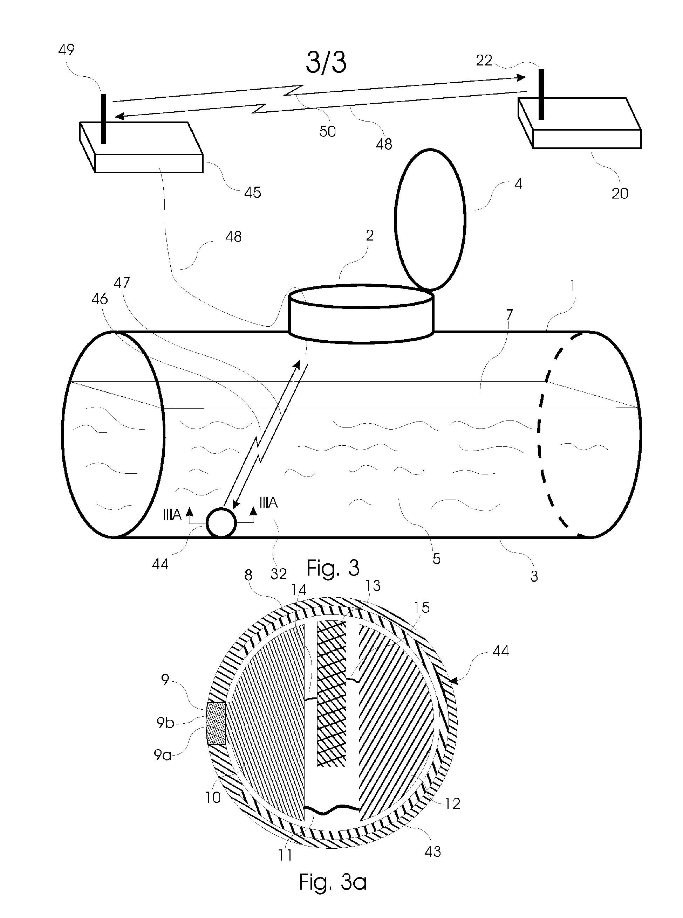

The most preferred configuration of a system according to the present invention is shown in fig. 3 and fig 3a, which will be described in common in the following. Fig. 3 shows schematically the tank 1 filled with fuel oil 7 as also shown in fig. 1. The system shown in fig. 3 corresponds substantially to the system shown in fig. 1 and for like parts same reference numbers are used. The system of fig. 3 differs from the system of fig. 1 in a seventh antenna 43 of a measurement unit 44 and an introduced second transmitter and/or receiver part 45 as well as an eighth antenna 48 extending from the second transmitter and/or receiver part 45 through the opening 2 into the tank 1. The seventh antenna 43 of the measurement unit 44 in fig. 3a is just inside the housing 8. To enable signals from 46 and to 47 the seventh antenna 43 to penetrate the housing 8, the material of the housing 8 has high transmittance for the used frequency of the wireless signal. The used frequency of the wireless signal is chosen so that the signal can pass the fuel oil 7 without losses due to absorbance, although small losses are allowed as long as the sensor signal from the measurement unit 44 through seventh antenna 43 can be detected and measured by the second transmitter and/or receiver part 45 through an eighth antenna 48 and the signal from the second transmitter and/or receiver part 45 through the eighth antenna 48 can be detected and measured by the measurement unit 44 through seventh antenna 43.

When the measurement unit 44 measures the pressure in the tank 1 the sensor signal 46 is wirelessly transmitted inside the tank to the second transmitter and/or receiver part 45 through the eighth antenna 48. Through a ninth antenna 49 the second transmitter and/or receiver part 45 further broadcasts the sensor signal 50 on the local radionet to the master control unit 20. The sensor signal is further transmitted as in fig.2. If it is time to do a measurement or if a request is sent from the user interface to do a measurement, a wakening signal 47 is sent from the master control unit 20 through the eighth antenna 48 to the measurement unit 44. The measurement unit 44 is awaken and measures the pressure at the bottom 3 of the tank 1 and sends a sensor signal 46 as described above.

In the shown example the eighth antenna 48 enters the tank 1 through the main opening 2. However, an electrical feedthrough on a flange fitted on a branch pipe on the tank 1 could in some cases be of advantage. The electrical feedthrough could also be fitted on the cover 4.

The present invention provides a system to measure the level of fluid in a reservoir that is easy to install irrespective of where the reservoir is situated and still is able to transmit the information to nearly anywhere on the earth, that gives a reliable measure of the fluid level in the reservoir, that has a long lifetime, that has a high resistance to fluid penetration

## Claims

1. A system for remote transmission of information indicative of at least one parameter of a fluid (7) contained in at least one reservoir (1,1a,1b,1c) to a remote user location outside the reservoir, which system includes
- a sensor means (10) for sensoring the at least one parameter and providing a sensor signal representing the information, and
- a communication means for transmission of the sensor signal to the remote user location outside the reservoir (1,1a,1b,1c),
**characterised in that** the system comprises that
- the sensor means (10) is submersible in the fluid encapsulated in a housing,
- the communication means comprises at least a first transmitter and/or receiver part (12) inside the housing, for communicating with a second transmitter and/or receiver part (12) outside the reservoir to a first location outside the reservoir (1,1a,1b,1c),
- the housing and the at least one encapsulated sensor means (10) and the at least encapsulated first transmitter and/or receiver part (12) together have a density, which is higher than the density of the fluid (7) in the at least one reservoir (1,1a,1b,1c), and
- the communication means is arranged for wireless transmission of the sensor signal from a location inside the reservoir (1,1a,1b,1c) to at least the first location outside the reservoir (1,1a,1b,1c).

2. A system according to claim 1, **characterised in that** the system has a communication means connecting the second transmitter and/or receiver part (45) outside the reservoir (1,1a,1b,1c) to a remote user location.

3. A system according to claim 2, **characterised in that** the communication means further includes a master control unit (20) for receiving the sensor signal and storing the parameter represented by the sensor signal, which stored parameter is accessible from the remote user location, preferably by means of a user interface (40a,40b).

4. A system according to any of the preceding claims 2 or 3, **characterised in that** the communication means includes alert means (41) for providing an alert at the remote user location that a parameter has been stored.

5. A system according to claim 4, **characterised in that** any of the sensor means (10), the communication means and/or, the alert means (41) and the user interface (40a,40b) are battery driven.

6. A system according to any of the preceding claims 3 - 5, **characterised in that** the user interface (40a,40b) is a computer, a mobile phone, an indicator, or a warning system including a sensible, visual or audible alert.

7. A system according to any of the preceding claims 1 - 6, **characterised in that** the at least one parameter is physical parameter selected from the group comprising the level of the fluid, the pressure of the fluid in the reservoir (1,1a,1b,1c), the volume of the fluid, the temperature of the fluid and weight of the fluid.

8. A system according to any of the preceding claims 1 - 7, **characterised in that** the sensor means (10) is selected from the group comprising a strain gauge or a capacitance pressure gauge.

9. A system according to any of the preceding claims 1 - 8, **characterised in that** the system comprises a plurality of distinct reservoirs (1a,1b,1c) provided with respective sensor means and respective communication means in communication with a respective remote user location via a common master control unit.

10. A system according to any of the preceding claims 1 - 9, **characterised in that** the system operates via Internet, radio communication, microwave communication, infrared communication, telecommunication and/or satellite communication.

11. A method for remote transmission of information indicative of at least one parameter of a fluid (7) contained in at least one reservoir (1,1a,1b,1c) to a remote user location outside the reservoir, **characterised in that** the method comprises the steps of
- submersing a sensor means (10) encapsulated in a housing in the fluid (7) in the reservoir (1,1a,1b,1c), which housing and at least one sensor means (10) together have a density, which is higher than the density of the fluid (7) in the at least one reservoir (1,1a,1b,1c),
- sensoring the at least one parameter,
- providing a sensor signal by means of the sensor means, which sensor signal represents the information, and
- wirelessly transmitting the sensor signal to at least outside the reservoir (1,1a,1b,1c) by means of a first transmitter and/or receiver part (12) inside the housing.

12. A method according to claim 11, **characterised in that** the sensor signal is transmitted from a second transmitter and/or receiver part (12) of the communication means outside the reservoir to the remote user location via a master control unit (20), which master control unit (20) receives the sensor signal and stores the sensor signal as data or information representing the sensored parameter, which master control unit (20) is accessible from the remote user location, preferably wirelessly accessible.

13. A method according to claim 12, **characterised in that** the second transmitter and/or receiver part (12) of the communication means is part of the master control unit (20).

14. Use of the system according to any of the preceding claims 1-10 or the method according to any of the preceding claims 11-13 for monitoring the fluid level in a reservoir.

15. Use of the system according to any of the preceding claims 1-10 or the method according to any of the preceding claims 11-13 on a conventional buried or freestanding fuel oil tank without branch pipes for insertion of sensor means.
